# EUROPÄISCHE PATENTSCHRIFT

(11) **EP 2 576 299 B1**
(45) Veröffentlichungstag und Bekanntmachung des Hinweises auf die Patenterteilung: **02.04.2014**
(21) Anmeldenummer: 11720301.8
(22) Anmeldetag: 19.05.2011
(51) Int. Cl.: B60T 8/32, B60T 8/36, B60T 13/68, G05D 16/20

(54) **VERFAHREN ZUR STEUERUNG DES DRUCKES IN EINEM ELEKTRONISCH GEREGELTEN HYDRAULISCHEN KRAFTFAHRZEUG BREMSENSYSTEM**
METHOD FOR CONTROLLING THE PRESSURE IN AN ELECTRONICALLY CONTROLLED HYDRAULIC BRAKE SYSTEM FOR A MOTOR VEHICLE
PROCÉDÉ POUR CONTRÔLER LA PRESSION D'UN SYSTÈME DE FREINAGE À COMMANDE ÉLECTRONIQUE POUR UN VÉHICULE AUTOMOBILE

(30) Priorität: 27.05.2010 DE 102010029384
(43) Veröffentlichungstag der Anmeldung: 10.04.2013
(73) Patentinhaber: Continental Teves AG & Co. oHG, 60488 Frankfurt (DE)
(72) Erfinder: LOOS, Mirco, 63110 Rodgau (DE)
(86) Internationale Anmeldenummer: PCT/EP2011/058205
(87) Internationale Veröffentlichungsnummer: WO 2011/147742

(56) Entgegenhaltungen:
- EP-A2- 2 019 008
- WO-A1-92/16397
- DE-A1- 3 924 510
- DE-A1-102009 045 993
- JP-A- 2010 042 702

## Beschreibung

Die Erfindung betrifft ein Verfahren zur Steuerung des Druckes in einem Hydrauliksystem, insbesondere in einem elektronisch geregelten Bremsensystem für ein Kraftfahrzeug, bei dem der Druck oder der Druckverlauf mit Hilfe wenigstens eines analogisierten Magnetventils gesteuert und/oder geregelt wird gemäß Oberbegriff des Patentanspruchs 1.

Es ist bekannt, in ABS- und/oder ESP-Systemen für Kraftfahrzeuge vermehrt analogisierte Magnetventile, sogenannte AD-Ventile zur Regelung der Hydraulikflüssigkeit einzusetzen. Der Spulenstrom, bei dem das AD-Ventil öffnet, ist von der am Magnetventil anliegenden Druckdifferenz abhängig.

Um die AD-Ventile regeln zu können, ist es notwendig genaue Informationen über den aktuellen Raddruck und den THZ-Druck des Tandemhauptzylinders (THZ) zu haben. Der THZ-Druck wird über einen Sensor erfasst.

DE 39 24 510 A1 offenbart eine Bremsanlage mit Magnetventilen die zum Schalten in schneller Folge mit Spannungsimpulsen versorgt werden. Der Spannungsimpuls wird in Zeitschritten bis zum maximalen Spannungswert auf- bzw. abgebaut um so die Geräuschemissionen zu verringern.

Ein Verfahren zum Regeln eines stromlos offenen Magnetventils in den Analogbetrieb ist aus der gattungsbildenden WO 03/0537353 bekannt, bei dem das Magnetventil zur Reduzierung von Ventilgeräuschen bei der Bremsdruckregelung in eine als Drossel wirkende teilgeöffnete Stellung geschaltet wird. Zur Steuerung der Magnetspule in diese Drosselstellung wird vorgeschlagen, dass diese mit fest eingestellten Stromwerten bestromt wird. Mit einem ersten Stromwert Null ist das Magnetventil im unbestromten Zustand, also voll geöffnet, mit einem zweiten Stromwert ist das Magnetventil im teilbestromten Zustand zu Drosselzwecken teilgeöffnet und mit einem dritten Stromwert ist das Magnetventil im vollbestromten Zustand und damit voll geschlossen. Ferner soll die Federkennlinie der Ventilfeder des Magnetventils derart ausgebildet werden, dass der Ventilkörper im teilbestromten Zustand der Magnetspule in der teilgeöffneten Stellung verharren bleibt.

Ein solches in einer Bremsenanlage eingesetztes Einlassventil wird im Analogbetrieb, also im teilgeöffneter Zustand in einem Gleichgewichtszustand zwischen Magnetkraft, Federkraft und hydraulischen Kräften betrieben.

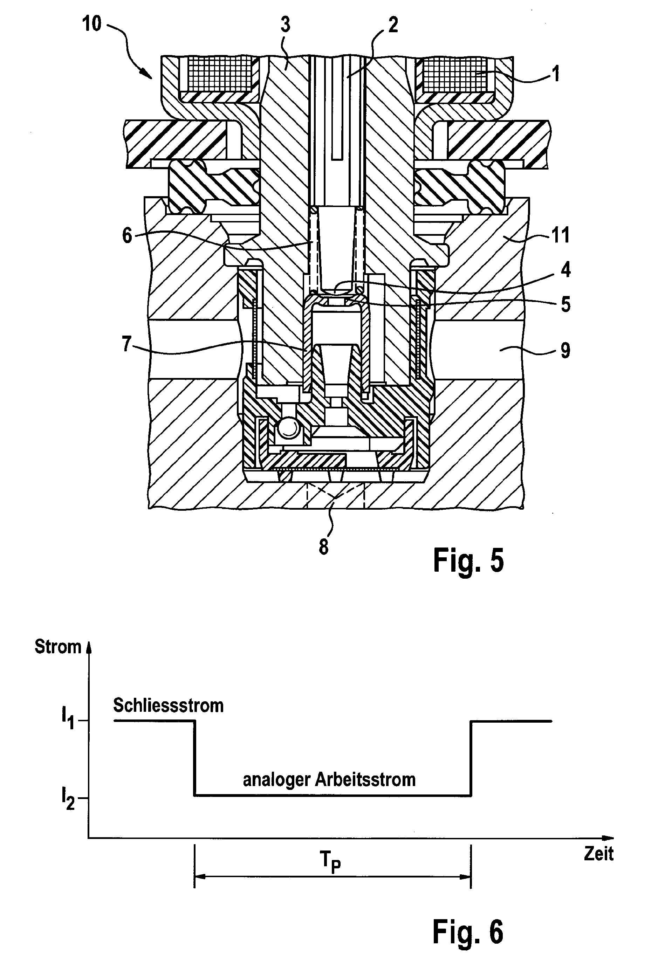

Diese Situation stellt ein ausschnittsweise in Figur 5 dargestelltes stromlos offenes Magnetventil 10 dar, das in einem Ventilblock 11 angeordnet ist. Dieses Magnetventil 10 umfasst ein Ventilgehäuse 3 mit einer Magnetspule 1, die bei Bestromung einen Anker (nicht dargestellt), der in Wirkverbindung mit einem Ventilstößel 2 steht, diesen in Richtung eines von einem Ventilsitzkörper 7 gebildeten Ventilsitzes 5 bewegt, wobei bei voller Bestromung der Magnetspule der Ventilkörper 5 die Öffnung des Ventilsitzes 7 verschließt, so dass über einen mit einem Tandemhochdruckzylinder verbundener Druckmitteleinlasskanal 8 keine Hydraulikflüssigkeit zufließen kann. Bei geöffnetem oder teilgeöffnetem Magnetventil 10 fließt zwecks Druckaufbaus Hydraulikflüssigkeit in eine mit einem Druckmittelauslasskanal 9 verbundene Radbremse. Die Rückstellkraft des Ventilstößels 2 wird von einer Ventilfeder 6 erzeugt.

Die PWM-gesteuerte Magnetspule 1 erzeugt eine auf den Ventilstößel 2 wirkende Magnetkraft, die im teilgeöffneten Zustand die Federkraft und die hydraulische Kraft, die im Wesentlichen der Differenz aus dem THZ-Druck und dem an dem Rad herrschen Bremsdruck entspricht, kompensiert, wodurch sich ein sehr sensibles Gleichgewicht einstellt. Die PWM-Steuerung zur Erreichung dieses Gleichgewichtszustandes zeigt das Zeit-Strom-Diagramm gemäß Figur 6, wonach der Stromwert I₁ des Schließstromes, bei dem das Magnetventil 10 im geschlossenen Zustand gehalten wird, auf einen Stromwert I₂ des Arbeitsstromes I während der Pulszeit Tp des PWM-Signals abgesenkt wird.

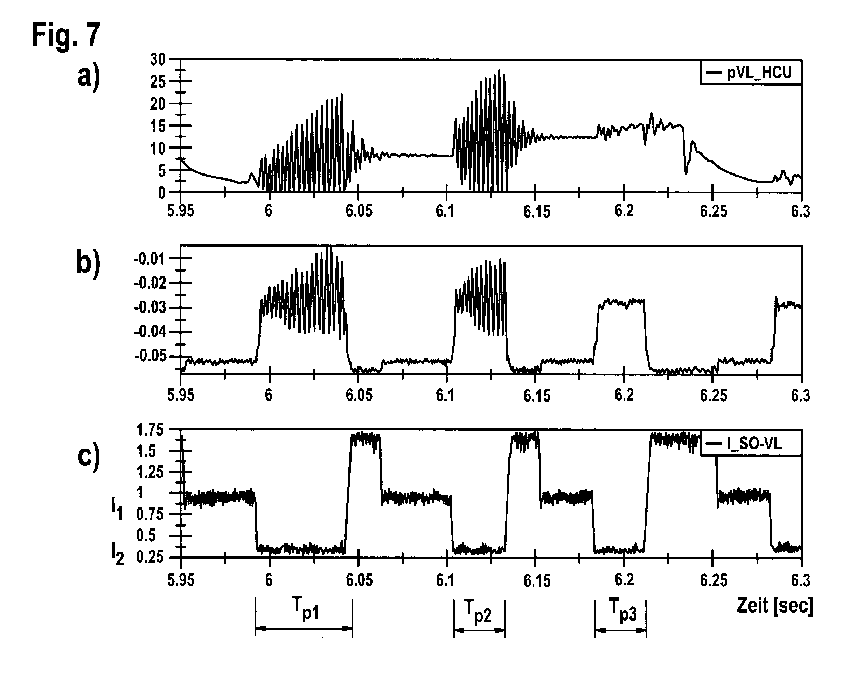

Die Stabilität dieses Gleichgewichtszustands ist nur in einem bestimmten Bereich gegeben. Die Breite dieses stabilen Bereichs hängt von vielen Betriebsparametern ab. Unter Grenzbedingungen können hydraulische Druckschwingungen aus dem Bremssystem zu einem Aufschwingen des Systems führen. Hierdurch wird auch die Stromregelung zu hochfrequenten Stellgrößenänderungen angeregt, wodurch aufgrund von Schwingungen des Ventilstößels Ventilgeräusche entstehen. Eine solche Situation zeigen die Messdiagramme nach Figur 7, die in zeitlicher Abhängigkeit einen Druckverlauf (Figur 7a) in einer angeschlossenen Radbremse, die Anker- bzw. Stößeloszillation (Figur 7b) und den Verlauf eines Spulenstrom (Figur 7c) zeigen. In dem Diagramm nach Figur 7c sind die einzelnen Bestromungsphasen deutlich erkennbar, insbesondere der Teilbestromungsphasen Tₚ₁, Tₚ₂ und Tₚ₃ mit einem Arbeitsstrom des Stromwertes I₂. Während dieser Teilbestromungsphasen Tₚ₁, Tₚ₂ und Tₚ₃ entstehen gemäß Figur 7b oszillierende Anker- bzw. Stößelbewegungen, die zu hochfrequenten Stellgrößenänderungen führen, so dass auch der Druckverlauf gemäß Figur 7a in diesen Teilbestromungsphasen Tₚ₁, Tₚ₂ und Tₚ₃ oszilliert.

An die Teilbestromungsphasen Tₚ₁, Tₚ₂ und Tₚ₃ schließt sich eine Vollbestromungsphase mit einem Stromwert an, in der das Magnetventil geschlossen wird, anschließend wird dieser Stromwert auf den Stromwert I₁ des Schließstromes reduziert, wodurch das Magnetventil im geschlossenen Zustand gehalten wird.

Bei Analogventilen wird versucht, durch ein Gleichgewicht zwischen der hydraulischen Kraft und der elektrischen Magnetkraft eine stabile Zwischenstellung des Ventilstößels zu erreichen.

Dabei besteht jedoch das Problem, dass aufgrund der toleranzbehaften Ansteuerkette von Analogventilen ein genaues Druckmodell notwendig ist, um eine reproduzierbare Ansteuerung von Analogventilen zu gewährleisten.

Dabei müssen bei Erstellung eines solchen Druckmodells folgende Einflüsse berücksichtigt werden:
- Raddruck,
- THZ-Druck,
- THZ-Druckgradient,
- Temperatur,
- Pulslänge,
- Präzision des eingestellten Stromes,
- Dynamik des Stromreglers,
- Bremsleitungslänge,
- Systemsteifigkeit,
- Qualität der Steuerkettenkalibrierung.

Eine erhöhte Neigung hinsichtlich des Auftretens von Ventilschwingungen besteht bei einem Bremssystem insbesondere bei niedrigem Raddruckniveau mit niedrigem Blockierdruckniveau von weniger als 30 bar in Kombination mit einem hohen THZ-Druck und hohen angeforderten analogen Volumenströmen.

Bei Druckmodellfehlern oder bei einer Verschiebung (Verschleiß) der Öffnungsstromkennlinie besteht jedoch die Gefahr, dass zu große Arbeitsströme berechnet werden, welches zu einem zu gering geschätzten Volumenstrom führen kann. Dies führt dazu, dass das Magnetventil zu große Gradienten einstellt und dazu neigt, eine Schwingung des Stößels aufzubauen. Unter diesen Grenzbedingungen können hydraulische Druckschwingungen aus dem Bremssystem zu einem Aufschwingen des Systems führen. Hierdurch wird auch die Stromregelung zu hochfrequenten Stellgrößenänderungen angeregt, wodurch geräuscherzeugende Schwingungen des Ventilstößels erzeugt werden. Diese Geräusche werden im Fahrzeug als sehr unangenehm und störend empfunden und wirken komfortbeeinträchtigend.

Die Aufgabe der Erfindung besteht darin, ein Verfahren der eingangs genannten Art anzugeben, mit dem das Auftreten von Ventilschwingungen verhindert oder zumindest wesentlich vermindert wird, um dadurch auch von schwingenden Ventilstößel verursachten Geräusche ebenfalls zu minimieren.

Diese Aufgabe wird gelöst durch ein Verfahren mit den Merkmalen des Patentanspruchs 1.

Bei diesem erfindungsgemäßen Verfahren zur Steuerung des Druckes in einem Hydrauliksystem, insbesondere in einem elektronisch geregelten Bremsensystem für ein Kraftfahrzeug, bei dem
- der Druck oder der Druckverlauf mit Hilfe wenigstens eines analogisierten Magnetventils gesteuert und/oder geregelt wird,
- zur Steuerung und/oder Regelung des Magnetventils in einen teilgeöffneten Zustand der Spulenstrom des Magnetventils durch einen Wechsel zwischen wenigstens einem ersten und einem zweiten Stromwert moduliert wird, und
   das Magnetventil mit einem dem ersten Stromwert entsprechenden Spulenstrom im geschlossenen Zustand gehalten wird,
   ist erfindungsgemäß vorgesehen, dass
- ein dritter Stromwert für den Spulenstrom vorgesehen ist, wobei der dritte Stromwert zwischen dem ersten und zweiten Stromwert liegt, und
- während der Bestromungsphase des Magnetventils, die zur Bestromung mit dem zweiten Stromwert vorgesehen ist, der Spulenstrom durch Wechsel zwischen dem zweiten Stromwert und dem dritten Stromwert mit der durch den dritten Stromwert vorgegebenen Amplitude und vorgegebenen Frequenz moduliert wird.

Hiernach zeichnet sich das erfindungsgemäße Verfahren dadurch aus, dass mittels einer durch eine Strommodulation in der Magnetspule erzeugte Kraftmodulation eine Stabilisierung des Ventilstößels und eine Reduzierung der Schwingungsneigung erzielt wird. Dabei ist die Frequenz der Kraftmodulation abhängig von der Eigenfrequenz des eingesetzten Magnetventils.

Gemäß einer vorteilhaften Weiterbildung der Erfindung wird die Stromamplitude der Modulation, also der dritte Stromwert in Abhängigkeit des angeforderten Volumenstroms des Magnetventils eingestellt.

Das erfindungsgemäße Verfahren kann in vorteilhafter Weise sowohl für SO-Magnetventile als auch für SG-Magnetventile eingesetzt werden, die im elektrisch unbestromten Zustand voll geöffnet bzw. voll geschlossen sind.

Im Folgenden wird das erfindungsgemäße Verfahren unter Bezugnahme auf die beigefügten Figuren näher erläutert und beschrieben. Es zeigen:
- Figur 1: ein Zeit-Spulenstrom-Diagramm als erfindungsgemäßes Ausführungsbeispiel eines modulierten Arbeitsstromes,
- Figur 2: Mess-Diagramme zur Darstellung der Reaktion des mit dem Arbeitsstrom gemäß Figur 1 bestromten Magnetventils,
- Figur 3: ein Diagramm zur Darstellung der Abhängigkeit der Amplitude des modulierten Arbeitsstromes von dem angeforderten Volumenstrom,
- Figur 4: ein Raddruck-Volumenstrom-Diagramm zur Darstellung des verwendbaren Arbeitsbereiches eines mit dem Arbeitsstrom gemäß Figur 1 bestromten Magnetventils,
- Figur 5: eine Detaildarstellung eines in einem Ventilblock einer Hydraulikeinheit angeordneten SO-Magnetventils gemäß Stand der Technik,
- Figur 6: ein Zeit-Strom-Diagramm zur Darstellung einer gemäß Stand der Technik bekannten Bestromungsphase eines Magnetventils nach Figur 5, und
- Figur 7: Mess-Diagramme zur Darstellung der Reaktion des mit dem Arbeitsstrom gemäß Figur 5 bestromten Magnetventils nach Figur 5.

Im Folgenden bezieht sich die Beschreibung auf ein SO-Magnetventil gemäß Figur 5, die bereits in der Beschreibungseinleitung beschrieben wurde.

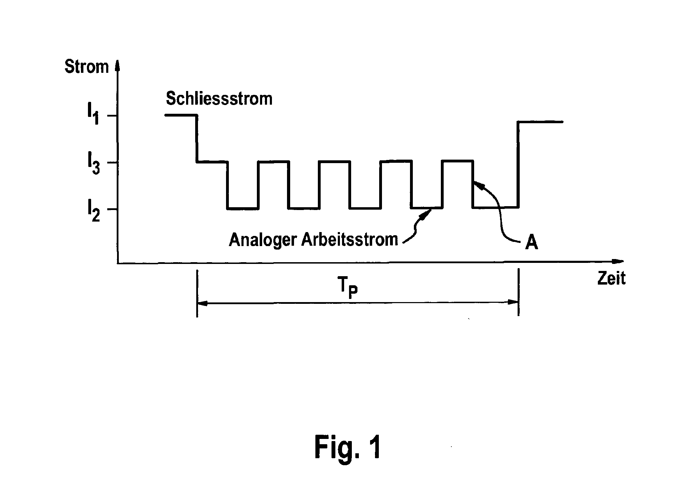

Figur 1 zeigt eine erfindungsgemäße Bestromungsphase Tp an, mit der das Magnetventil in eine teilgeöffnete Stellung gesteuert wird. Vor dieser Bestromungsphase Tp befindet sich das Magnetventil in seiner geschlossenen Stellung und wird in dieser Stellung durch einen im folgenden Schließstrom genannten Spulenstrom mit einem ersten Stromwert I₁ bestromt.

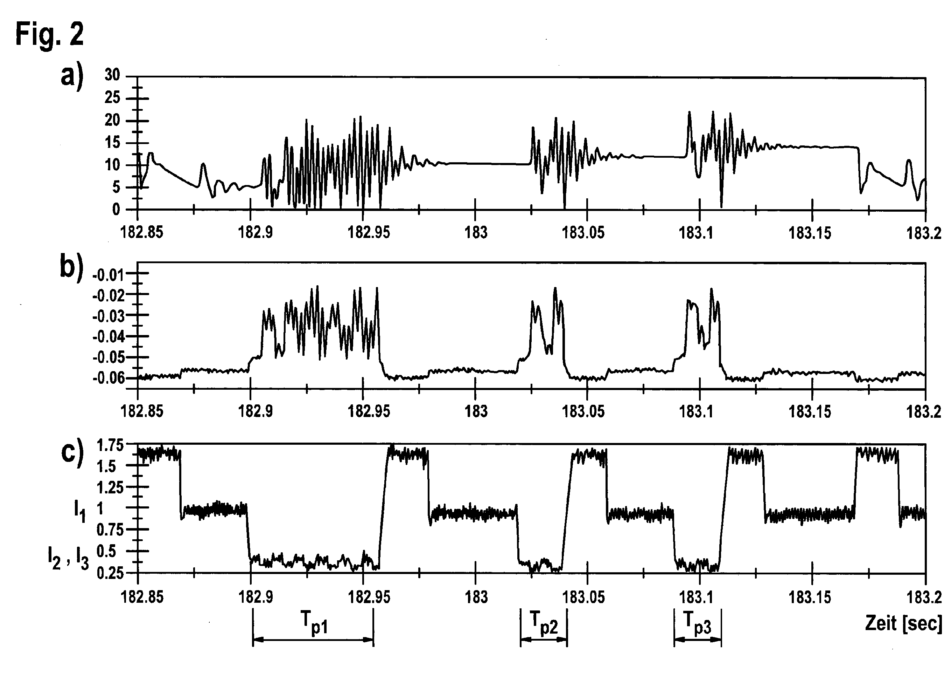

In der Bestromungsphase wird der Spulenstrom auf einen ersten Stromwert I₂, im folgenden Arbeitsstrom genannte, absenkt und mit einer Amplitude A, die zu einem dritten Stromwert I₃ führt, mit einer vorgegebenen Frequenz moduliert. Hierdurch wird in dem Magnetventil eine Kraftmodulation erzeugt, die zu einer Modulation der Bewegung des Ventilstößels führt, jedoch ohne geräuscherzeugenden Oszillationen, wie dies in den Diagrammen a) und c) gemäß Figur 2 dargestellt ist.

In Figur 2 zeigt das Diagramm a) drei Bestromungsphasen Tₚ₁, Tₚ2 und Tₚ₃ mit jeweils einem entsprechend Figur 1 dargestellten modulierten Arbeitsstrom. Die benachbarten Bestromungsphasen entsprechen denjenigen aus dem Diagramm nach Figur 7c).

Das Diagramm b) der Figur 2 zeigt die durch den modulierten Arbeitsstrom erzeugten Modulationsbewegungen während der Bestromungsphasen Tₚ₁, Tₚ₂ und Tₚ₃, jedoch ohne die gemäß Figur 7b) auftretenden Oszillationen. Das Diagramm a) der Figur 2 zeigt den zugehörigen Druckverlauf in einer Radbremse.

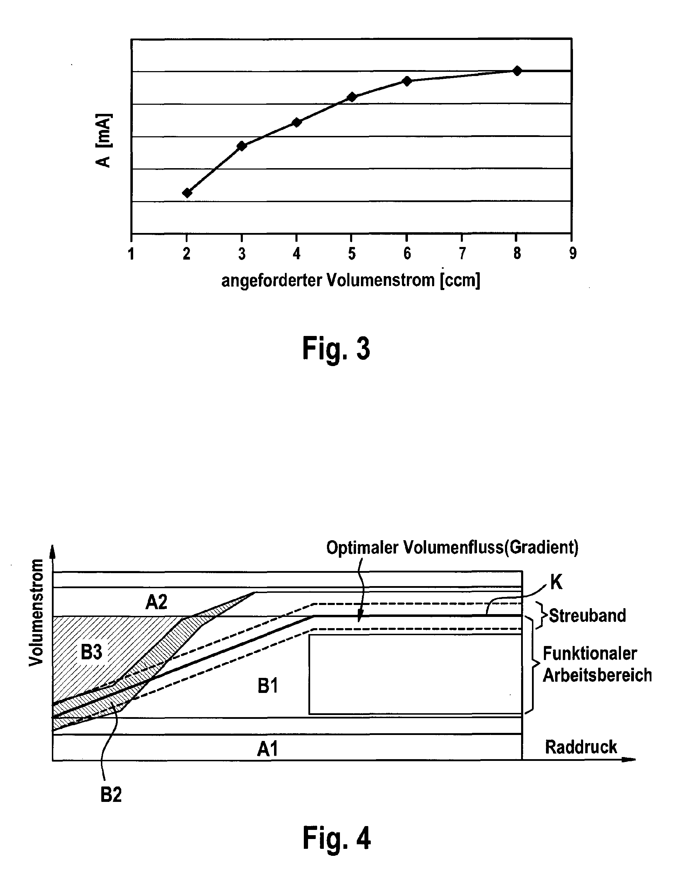

Die Amplitude A und die Frequenz der Strommodulation des Arbeitsstromes werden mittels Prüfstanduntersuchungen optimiert, wobei nach Figur 3, die Amplitude A, d. h. die nach Figur 1 der Differenz des dritten Stromwertes I₃ und des zweiten Stromwertes I₂ entspricht.

Das Raddruck-Volumenstrom-Diagramm nach Figur 4 zeigt die vorteilhafte Wirkung der erfindungsgemäßen Ansteuerung eines SO-Magnetventils. Hiernach gibt es einen aufgrund zu geringer Volumenströme einen nicht nutzbaren Arbeitsbereich A1, ferner einen weiteren im oberen Volumenstrombereich liegenden Bereich A2, der ebenfalls nur eingeschränkt nutzbar ist.

Der eigentlich nutzbare funktionale Arbeitsbereich liegt dazwischen und besteht aus einem Bereich B1, einem Bereich B2 und einem Bereich B3.

Der Bereich B1 stellt einen hinsichtlich Funktion und Komfort stabilen Arbeitsbereich dar, der auch für in bekannter Weise gemäß Figur 6 angesteuerte SO-Magnetventile zur Verfügung steht und bei dem keine geräuscherzeugenden Schwingungen auftreten.

Wird das Magnetventil gemäß Figur 1 bestromt, ergibt sich zusätzlich der Bereich B2, der den Bereich hinsichtlich Funktion und Komfort, d. h. also ohne Geräuschentwicklung erweitert. Der Bereich B3 ist nur funktional robust, bei dem also geräuscherzeugende Schwingungen auftreten können. Somit kann eine optimale Kennlinie K mit einem bestimmten Streuband gefahren werden, die sowohl hinsichtlich Funktion als auch hinsichtlich minimaler Geräuschentwicklung optimal ist.

## Patentansprüche

1. Verfahren zur Steuerung des Druckes in einem Hydrauliksystem, insbesondere in einem elektronisch geregelten Bremsensystem für ein Kraftfahrzeug, bei dem
- der Druck oder der Druckverlauf mit Hilfe wenigstens eines analogisierten Magnetventils (10) gesteuert und/oder geregelt wird,
- zur Steuerung und/oder Regelung des Magnetventils (10) in einen teilgeöffneten Zustand der Spulenstrom (I) des Magnetventils durch einen Wechsel zwischen wenigstens einem ersten (I₁) und einem zweiten Stromwert (I₂) moduliert wird, und
das Magnetventil (10) mit einem dem ersten Stromwert (I₁) entsprechenden Spulenstrom (I) im geschlossenen Zustand gehalten wird,
**dadurch gekennzeichnet, dass**
- ein dritter Stromwert (I₃) für den Spulenstrom (I) vorgesehen ist, wobei der dritte Stromwert (I₃) zwischen dem ersten und zweiten Stromwert liegt (I₁, I₂) und
- während der Bestromungsphase (Tₚ₁, Tₚ₁, Tₚ₁) des Magnetventils (10), die zur Bestromung mit dem zweiten Stromwert (I₂) vorgesehen ist, der Spulenstrom (I) durch Wechsel zwischen dem zweiten Stromwert (I₂) und dem dritten Stromwert (I₃) mit der durch den dritten Stromwert (I₃) vorgegebenen Amplitude (A) und vorgegebenen Frequenz moduliert wird.

2. Verfahren nach Anspruch 1,
**dadurch gekennzeichnet, dass**
der dritte Stromwert (I₃) in Abhängigkeit des angeforderten Volumenstroms des Magnetventils (10) eingestellt wird.

3. Verfahren nach Anspruch 1 oder 2,
**dadurch gekennzeichnet, dass**
ein Magnetventil (10) vorgesehen ist, bei dem im elektrisch unbestromten Zustand das Magnetventil voll geöffnet ist.

4. Verfahren nach einem der vorhergehenden Ansprüche,
**dadurch gekennzeichnet, dass**
ein Magnetventil (10) vorgesehen ist, bei dem im elektrisch unbestromten Zustand das Magnetventil voll geschlossen ist.

## Claims

1. Method for controlling the pressure in a hydraulic system, in particular in an electronically regulated brake system for a motor vehicle, in which method
- the pressure or the pressure profile is controlled and/or regulated by means of at least one analogized solenoid valve (10),
- to control and/or regulate the solenoid valve (10) such that it moves into a partially open state, the coil current (I) of the solenoid valve is modulated by alternation between a first (I₁) and a second current value (I₂), and
the solenoid valve (10) is held in the closed state by means of a coil current (I) corresponding to the first current value (I₁),
**characterized in that**
- a third current value (I₃) for the coil current (I) is provided, wherein the third current value (I₃) lies between the first and second current values (I₁, I₂) and,
- during that energization phase (Tₚ₁, Tₚ₂, Tₚ₃) of the solenoid valve (10) which is provided for energization with the second current value (I₂), the coil current (I) is modulated by alternation between the second current value (I₂) and the third current value (I₃) with the amplitude (A) predefined by the third current value (I₃) and a predefined frequency.

2. Method according to Claim 1,
**characterized in that**
the third current value (I₃) is set as a function of the demanded volume flow rate through the solenoid valve (10).

3. Method according to Claim 1 or 2,
**characterized in that**
a solenoid valve (10) is provided in which the solenoid valve is fully open in the electrically deenergized state.

4. Method according to one of the preceding claims,
**characterized in that**
a solenoid valve (10) is provided in which the solenoid valve is fully closed in the electrically deenergized state.

## Revendications

1. Procédé de commande de la pression dans un système hydraulique, en particulier dans un système de freinage à régulation électronique pour un véhicule automobile, dans lequel
- la pression ou la courbe de pression est commandée et/ou régulée à l'aide d'au moins une électrovanne (10) rendue analogique,
- pour la commande et/ou la régulation de l'électrovanne (10) dans un état partiellement ouvert, le courant de bobine (I) de l'électrovanne est modulé par une commutation entre au moins une première (I₁) et une deuxième (I₂) valeur de courant, et
- l'électrovanne (10) est maintenue dans l'état fermé avec un courant de bobine (I) correspondant à la première valeur de courant (I₁),
**caractérisé en ce**
- **qu'**une troisième valeur de courant (I₃) pour le courant de bobine (I) est prévue, la troisième valeur de courant (I₃) se situant entre la première et la deuxième valeur de courant (I₁, I₂) et
- pendant la phase d'alimentation en courant (Tₚ₁, Tₚ₂, Tₚ₃) de l'électrovanne (10) qui est prévue pour être alimentée avec la deuxième valeur de courant (I₂), le courant de bobine (I) est modulé par commutation entre la deuxième valeur de courant (I₂) et la troisième valeur de courant (I₃) avec l'amplitude (A) et la fréquence prédéfinies par la troisième valeur de courant (I₃).

2. Procédé selon la revendication 1,
**caractérisé en ce que**
la troisième valeur de courant (I₃) est ajustée en fonction du débit volumique requis pour l'électrovanne (10).

3. Procédé selon la revendication 1 ou 2,
**caractérisé en ce**
**qu'**il est prévu une électrovanne (10) dans laquelle l'électrovanne est complètement ouverte dans l'état non alimenté en courant.

4. Procédé selon l'une quelconque des revendications précédentes,
**caractérisé en ce**
**qu'**il est prévu une électrovanne (10) dans laquelle l'électrovanne est complètement fermée dans l'état non alimenté en courant.
